(19) Europäisches Patentamt / European Patent Office / Office européen des brevets

(11) **EP 2 913 796 B1**

(12) **EUROPEAN PATENT SPECIFICATION**

(45) Date of publication and mention
of the grant of the patent:
**27.03.2019 Bulletin 2019/13**

(51) Int Cl.:
***G06T 7/00*** *(2017.01)*

(21) Application number: **14156863.4**

(22) Date of filing: **26.02.2014**

(54) **Method of generating panorama views on a mobile mapping system**

Verfahren zur Erzeugung von Panoramaansichten auf einem mobilen Abbildungssystem

Procédé de génération de vues panoramiques sur un système mobile de cartographie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.09.2015 Bulletin 2015/36**

(73) Proprietor: **NavVis GmbH
80335 München (DE)**

(72) Inventor: **Reinshagen, Felix
80335 München (DE)**

(74) Representative: **Rummler, Felix
Maucher Jenkins
Liebigstrasse 39
80538 München (DE)**

(56) References cited:
**EP-A2- 2 045 133     US-B1- 6 917 693**

- **KATSAGGELOS A K ET AL: "A Multicamera Setup for Generating Stereo Panoramic Video", IEEE TRANSACTIONS ON MULTIMEDIA, IEEE SERVICE CENTER, PISCATAWAY, NJ, US, vol. 7, no. 5, 1 October 2005 (2005-10-01) , pages 880-890, XP011139267, ISSN: 1520-9210, DOI: 10.1109/TMM.2005.854430**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The ability to precisely and thoroughly map, measure and survey indoor environments is key for a variety of applications in industries like civil engineering, architecture, security, movie productions, asset management, and many more. Applications include specified/asbuilt comparisons with respect to the CAD data for newly built buildings. Changes with respect to the construction plan can be easily detected and corrected. Building information models can be generated based on the mapping data, which allows for an efficient planning and designing of modifications to that building. This could include the integration of a new pipe system at a factory site or the remodeling of office spaces.

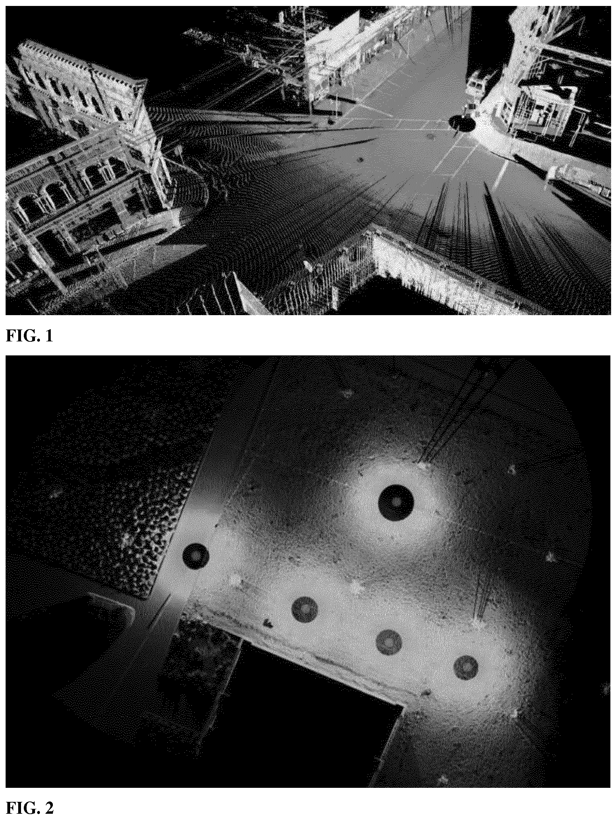

Leica Geosystems has mapped parts of an oil platform using their high-definition surveying scanners (HDS) to detect and measure deformations in the construction. The mapping was performed by using the Leica HDS6000 scanner, which precisely measures the distance and bearing of surrounding objects with respect to a single reference point. Due to the rotating scanner head, distance measurements are performed along 360 degrees in horizontal and vertical direction. These static scanners, however, can only provide distance measurements along the line of sight of a single scanning position. As shown in Figure 1 (copyright Leica Geosystems - HDS) that illustrates the distance measurements by the observed three-dimensional points (a so called point cloud), parts of a scene that are occluded by other objects cannot be measured by a single scan. Typically, multiple stationary scans are performed to resolve these occlusions as illustrated in Figure 2 (copyright http://www.laserscanningeurope.com/), which shows the top view of a point cloud generated by four stationary scans. The observed three-dimensional points of the individual scans are stitched to obtain a single point cloud. Nevertheless, even with multiple stationary scans, significant occlusions will still occur and it requires a complex planning of scanning locations to avoid these effects. These shadowing effects are especially severe in indoor environments with narrow hallways.

With a single stationary scan requiring minutes to hours to complete plus the required effort to subsequently combine the individual scans into a single point cloud, the generation of a complete point cloud of the interiors of a building is very time consuming.

In modern movie productions 3D models of recorded scenes are essential to integrate special visual effects. These models can be automatically generated based on detailed and complete mapping data of the scene. As in the previous example, multiple stationary scans are performed to fully map a scene without occlusions. Since the time and planning involved to obtain the point clouds is tremendous, this technique can only be applied in high budget productions.

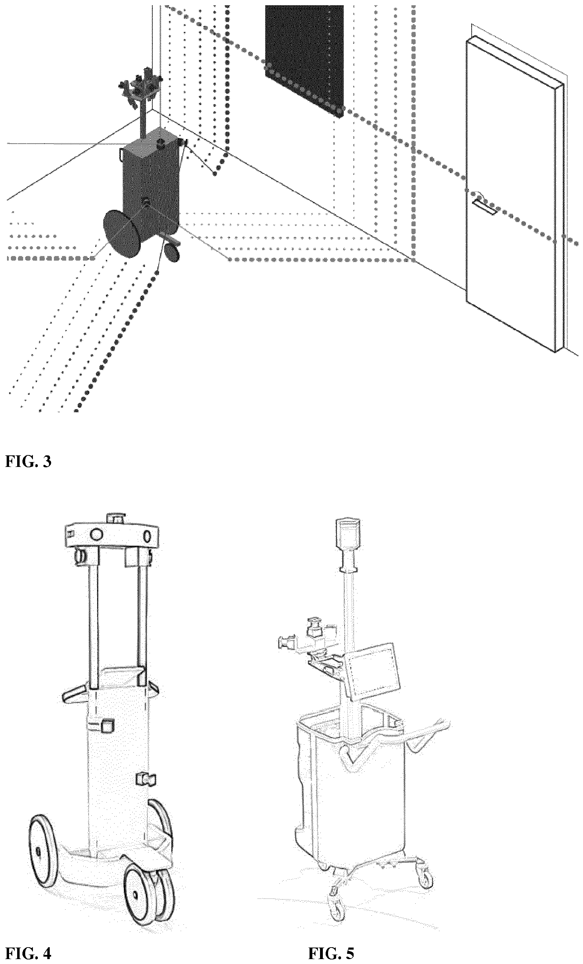

Due to these shortcomings of stationary distance and bearing scanners, a new class of mapping devices have recently emerged that are specifically designed to map indoor environments. These so called mobile mapping systems employ multiple (typically two) laser scanners that continuously scan their vicinity along multiple vertical planes as illustrated in Figure 3 by the green and blue dotted lines. While moving these mobile mapping systems along, e.g., a hallway, the individual planar scans are aggregated and merged to a single point cloud using information about the relative scanning positions. This information about the relative scanning positions can be obtained by using, e.g., a wheel odometry (GPS is hardly available indoors). A more precise position estimate can be obtained by an additional laser scanner that observes its environment along a horizontal plane (illustrated by the red dotted line in Figure 3). So called simultaneous localization and mapping (SLAM) algorithms allow for almost drift free positioning in large scale environments.

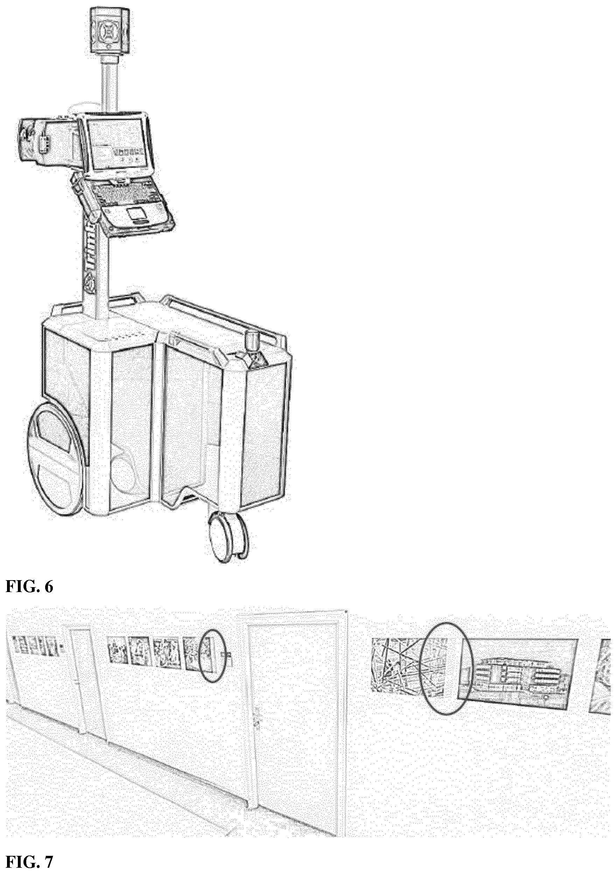

The advantage of these mobile mapping systems is the possibility of observing and mapping a scene while moving the system. Due to the resulting multiple viewpoints, occlusions can be avoided. Examples of these mobile mapping systems include the NavVis M3 Mapping Trolley (Figure 4), the Viametris IMMS (Figure 5, copyright Viametris), and the Trimble TIMMS (Figure 6, copyright Trimble). However, not only distance and bearing measurements are required in today's mapping applications. Additional visual information, typically in the form of panoramic images, is crucial to texturize 3D models in, e.g., movie productions, to allow for exact specified/asbuilt comparisons, to provide a more intuitive and detailed context in asset management, architecture, civil engineering, and many more applications like Google Streetview for indoors. 3D laser scanners like the above mentioned Leica HDS scanners already generate a colored point cloud, i.e., every distance and bearing scan also involves measuring the color and brightness of a 3D point, yet at low quality. The more advanced mobile mapping systems typically employ panoramic cameras that provide high resolution and high quality imagery. Both Trimble TIMMS as well as Viametris IMMS mapping systems employ a panoramic camera developed by Point Grey Inc. consisting of six wide angle (fisheye) cameras. The six images are superimposed according to their relative orientation to obtain a full 360 degree panorama. Further, the six cameras are mounted as close as possible to make sure the principal points of the cameras are as close as possible to each other. This is essential to avoid or reduce the parallax problem, which becomes visible when superimposing the images to a panorama as shown by the marked regions in Figure 7. In the shown panorama section the individual images are blended to reduce the visibility of these parallax artifacts.

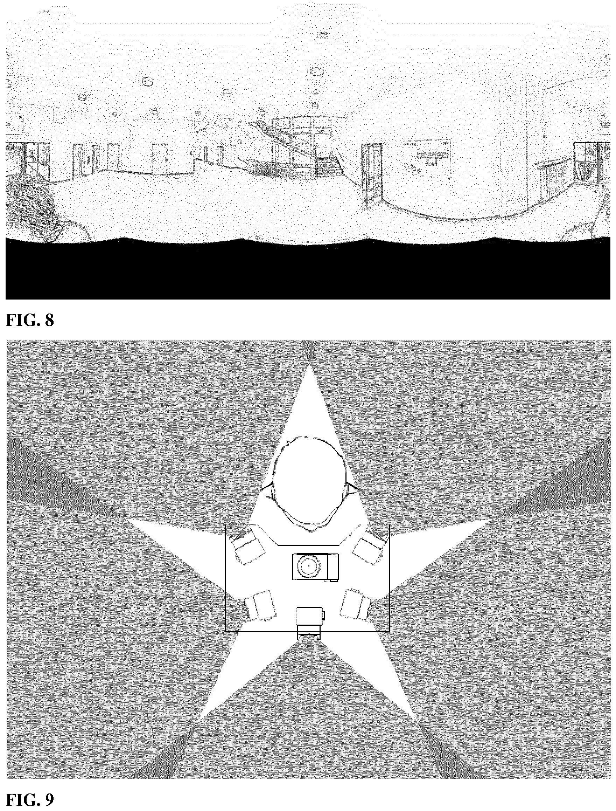

As the mobile mapping systems are typically operated by a person, it can be hardly avoided that parts of the operator are visible in the panoramic image. Due to the limitations of the overall height of the mapping system, the panoramic camera is typically mounted in a height of approximately 150 - 200 cm. Even when asking the operator to crouch every time images are taken, at least his/her head will be visible as shown in Figure 8. Clearly, crouching or even asking the operator to completely move out of the field of view of the mapping system drastically slows down the mapping process.

US 6917693 B1 describes a vehicle data acquisition and display assembly which includes several cameras which selectively and cooperatively receive images from the environment or the ambient environment in which a vehicle resides. The acquired images form a panoramic mosaic, at least a portion of which is selectively displayed by a display assembly within the vehicle.

EP 2045133 A2 describes a vehicle periphery monitoring apparatus including an image capturing device, a display device, a blind spot determining section, and a processing section. The image capturing device is arranged to capture an image of a region rearward of a host vehicle and an image of a region laterally rearward of the host vehicle.

KATSAGGELOS A K ET AL: "A Multicamera Setup for Generating Stereo Panoramic Video", IEEE TRANSACTIONS ON MULTIMEDIA, IEEE SERVICE CENTER, PISCATAWAY, NJ, US, vol. 7, no. 5, 1 October 2005 (2005-10-01), pages 880-890, XP011139267, ISSN: 1520-9210, DOI: 10.1109/TMM.2005.854430 describes a multi-camera setup for generating stereo panoramic video.

BRIEF DESCRIPTION OF THE DRAWINGS

Fig. 1 is an illustration of the distance measurements generated by a static 360-degree laser scanner (copyright Leica Geosystems - HDS). As shown, areas of the scene that are occluded by other objects cannot be measured from a single scanning position;
Fig. 2 illustrates a top view of a point cloud generated by four stationary laser scans;
Fig. 3 illustrates a typical assembly of three laser scanners on a mobile mapping system. The dotted lines correspond to the 3D point measurements performed by the laser scanners;
Fig. 4 is an illustration of a NavVis M3 Mobile Mapping System;
Fig. 5 is an illustration of a Viametris Mobile Mapping System;
Fig. 6 is an illustration of a Trimble Mobile Mapping System;
Fig. 7 is an illustration of an image of an indoor environment including two circled areas showing the parallax effect when superimposing images recorded from different positions to a panoramic view;
Fig. 8 is a panoramic view recorded by a standard panorama camera with the mobile mapping system including the operator in the field of view (shown on the bottom far left and right sides of the image);
Fig. 9 is an illustration of an assembly of six cameras to record panoramic images without the operator of the mobile mapping device being visible according to an exemplary preferred implementation of the present invention. The two cameras, which comprise fields of view (shown by the shaded grey areas) in the direction of the operator, are arranged to form a blind spot for accommodating the operator.
Fig. 10 is a three-dimensional illustration of the assembly of Fig. 9;
Fig. 11 is a top view of the three-dimensional illustration of Fig. 10;
Fig. 12 is a diagram illustrating the relationship of the reference images and the panoramic view in the image-based rendering process.

SUMMARY OF THE INVENTION

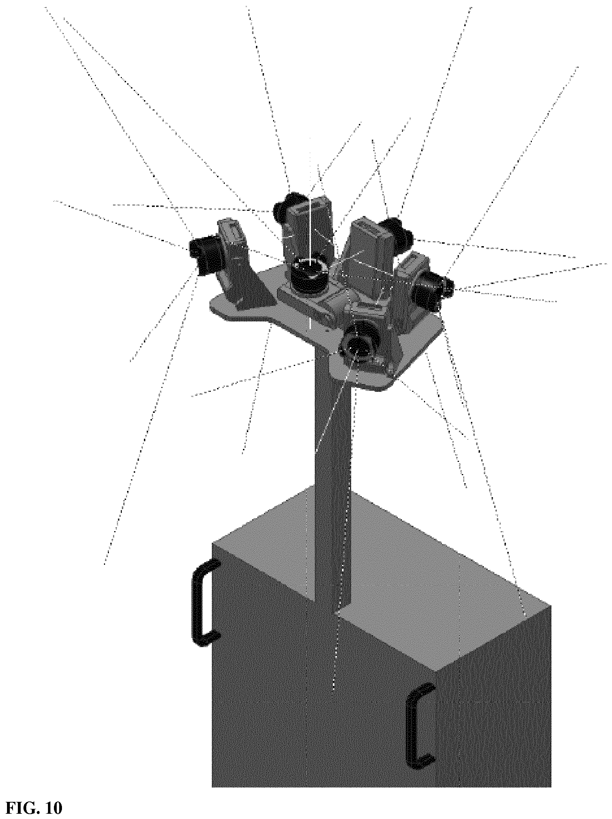

The present invention resides in a novel approach that enables continuous and accurate generation of complete 360-degree panoramic imagery without the operator being visible. To this end, a plurality of cameras are mounted in a close proximity to one another, wherein two of the plurality of cameras comprise fields of view in the direction of the operator of the mobile mapping device and are arranged to form a blind spot for accommodating the operator. This camera setup of an exemplary preferred implementation of the present invention is illustrated in Figures 9, 10, and 11 for a system consisting of six cameras.

By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. In fact, the parallax effect can also be removed when knowledge about the surrounding 3D geometry is available. Using so-called image based rendering approaches, the individual recorded images are projected onto the 3D geometry and back projected into the panoramic image sphere. The required information on the 3D geometry is actually available when combining this camera setup with our above described mapping system.

Firstly, as described above and illustrated in Figure 3, the attached laser scanners sample the surroundings to generate a 3D point cloud (explicit geometry). Second, information about the 3D geometry can be obtained via correspondences identified among the captured images (implicit geometry). These two techniques will be described in more detail in the context of the invention below.

By determining corresponding pixels among images recorded by the mobile mapping system, the depth of the pixels can be determined via triangulation. The identification of corresponding pixels, however, can be a difficult task in feature poor indoor environments like hospitals.

According to the present invention, panorama images of an environment are generated using a mobile mapping device comprising at least two cameras mounted in close proximity to one another on the device. Two of the cameras are facing the direction of the operator of the mobile mapping device and thus comprise fields of view in the direction of the operator. These two cameras and are arranged to form a blind spot for accommodating the operator. The images taken by each camera to form the panorama image may be taken simultaneously or consecutively. All images are preferably location-tagged and stored in a database. After the images of the environment have been generated by the cameras, they are processed using 3D geometry data associated with the environment to adjust parallax error in the images. By performing mobile mapping in this fashion, the present invention enables continuous and accurate generation of complete 360-degree panoramic imagery without the operator in the field of view.

In three preferred embodiments of the present invention, the environment being mapped by the mobile mapping device is an indoor environment, for example the inside of a building and/or the mobile mapping device is manually operated, for example is a movable trolley. According to these embodiments, the technique of mapping an environment with a manually operated mapping device is especially suited to the mapping of indoor environments.

In a further embodiment of the present invention which may optionally be combined with any of the aforementioned embodiments, the mobile mapping device specifically comprises more than two cameras and the blind spot is formed by arranging the two cameras comprising fields of view in the direction of the operator at a greater distance from one another than the other cameras of the plurality of cameras. By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. However, the parallax effect is removed when by use of the surrounding 3D geometry according to the present invention.

In a further embodiment of the invention that may optionally be combined with any of the aforementioned embodiments, the mobile mapping device comprises more than two cameras and the blind spot is formed by rotating the cameras to increase the distance between the point of overlap of the fields of view and the mapping device. By rotating either or both of the cameras facing the in the direction of the operator in opposite directions from one another i.e. in a direction away from the operator, the blind spot extends in a direction away from the vicinity of the mobile mapping device until the two respective fields of view intersect, thus providing more area to accommodate the operator if necessary. According to this embodiment, the need to space the two cameras facing in the direction of the operator further apart from one another may be obviated. This thereby reduces the level of parallax error in the panoramic image whilst also providing more space in the blind spot to hide the operator. However, it should be noted that a certain amount of image data in the area directly behind the operator that would otherwise be generated, may be lost due to this technique in comparison to spacing the two cameras further apart.

According to a further embodiment of the invention, that may also be optionally combined with any one of the above embodiments, the 3D geometry data used to is generated by determining corresponding pixels of the images generated by at least one of the cameras. This embodiment effectively applies the second implicit geometry approach as described above. Advantageously, it is the correspondences among any set of the generated images which enable data regarding the 3D geometry of the environment to be obtained in order to adjust the parallax error in the currently generated images. Due to the images taken by each camera used to generate the 3D geometry data having been taken simultaneously or consecutively, the 3D geometry data may be generated from the entire database of recorded images i.e. those images taken simultaneously by more than one camera and/or consecutively by at least one camera which may be the same or a different camera. Since all images are registered to one another dependent on location, the pixel correspondences between all the images in the database may conveniently be converted into 3D coordinates and points. The larger selection of images used to determine the pixel correspondences thereby improves the accuracy of the resulting 3D geometry data and hence improves the parallax error correction based thereupon.

According to yet another embodiment of the invention which may optionally be combined with any of the above embodiments, the 3D geometry data is generated by using at least one scanning means to scan the environment along multiple planes. This is effectively the first explicit geometry technique referred to above. The preferred embodiment uses a plurality of laser scanners as illustrated in Figure 3, which improves accuracy of the parallax error adjustment due to more 3D geometry data being available, and it effectively being real-time information. The multiple planes may include 360 degree horizontal and/or 360 degree vertical directions. However it should be noted that either a single, or multiple laser scanners may be used. The skilled person will also appreciated that equivalent scanning means exist such as Microsoft Kinect, light-field cameras, or time of flight cameras which also provide a suitable means for recording the 3D geometry of an environment directly.

According to a further preferred embodiment, the step of generating the panorama images is conducted continuously. This enables facilitated continuous generation of 360 degree panoramic imagery without the operator in the field of view, thereby advantageously reducing the amount of time needed to map a given environment.

EXAMPLE OF PREFERRED IMPLEMENTATION

In an example of a preferred implementation of the present invention, a mobile mapping device comprising any of the camera rigs mounted on the trolleys in Figures 3 to 6 is used to generate panorama images of the environment by wheeling the trolley down the corridors of a building. In this example, the trolley is equipped with multiple laser scanners and multiple cameras. It will be appreciated by the skilled person that the multiple cameras and laser scanners may be in the form of a rig or plurality of that rigs that is/are mountable on the trolley, but may also be provided as integral features of the trolley.

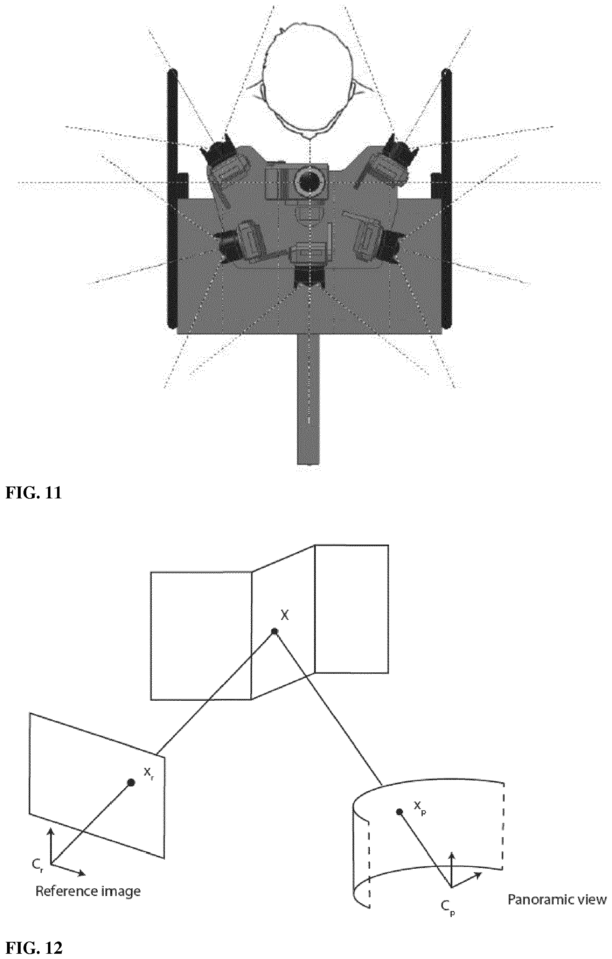

As the trolley is moved through the environment to be mapped, the cameras record images which may be used to form a 360-degree panoramic image, while the laser scanners record the horizontal and vertical dimensions of the corridor. At least two of the cameras mounted on the trolley are mounted in close proximity to one another on the device and face in the direction of the operator of the trolley. Thus, both of these cameras comprise fields of view in the direction of the operator. Through either spacing these two cameras further apart from one another, or rotating them in opposite directions from one another, the cameras are arranged to form a blind spot of sufficient area to hide the operator of the trolley as clearly illustrated in Figures 9 and 11.

The images taken by each camera to form the panorama image are taken either simultaneously or consecutively. After the images of the environment have been recorded by the cameras, they are processed using 3D geometry data associated with the environment to adjust parallax error in the images.

In the following a specific example for removing the parallax effect when knowledge about the 3D geometry is available in the form of 3D point clouds is provided in accordance with this preferred implementation of the present invention. This approach is also known as point-based rendering and is a natural choice for geometry acquisition methods like the ones employed on the mobile mapping system of the present invention, i.e., laser scanners, stereo reconstruction or structure from motion techniques. In point-based rendering, the images recorded by the cameras mounted on the mobile mapping systems are mapped onto the panoramic view using some form of geometry, e.g., depth map, 3D polygon mesh (explicit geometry) or correspondences between views.

In this example a 3D polygon mesh is employed, which can be viewed as an approximation of the real surface that has been sampled (3D points) by the laser scanners of the mobile mapping system. To obtain this approximation a polygon mesh is fitted into the 3D point cloud by minimizing the distance between the mesh and each recorded 3D point. This process is subject to a constraint that ensures that the mesh results in a smooth surface. Based on this polygon mesh-based representation of the 3D geometry captured by the laser scanners of the mobile mapping system, a relationship between the pixels in the reference views and the pixels in the panoramic view can now be defined. As a first step the ray for a pixel $x_p$ in the panoramic view is traced from the target view onto the 3D geometry, i.e., the polygon mesh, as illustrated in Figure 12. This depth computation can be processed very efficiently, for example, via rendering engines like OpenGL. The resulting 3D point X is subsequently projected into the reference camera frames to determine the corresponding coordinates in the reference image $x_r$. The resulting mapping can be written as

$$X = C_p + \rho_p P_p^{-1}(x_p) \tag{1}$$

$$x_r = P_r(X - C_r) \tag{2}$$

wherein, $x_p$ and $x_r$ are coordinates of the projection of 3D point X on the panoramic view and reference images, respectively. C and P correspond to the camera center and projection function. $\rho_p$ is the length of the ray between the center of the panoramic view and the 3D point x, i.e., the depth. Thus, for every pixel $x_p$ in the panoramic view, the corresponding coordinates in the reference view(s) $x_r$ can be determined via this mapping. The coordinates $x_r$, however, are almost always at subpixel location. Hence, to assign the right intensity or color value to the pixel in the panoramic view and to avoid aliasing effects, the value is typically computed by a weighted average of the neighboring pixels at

the coordinate $x_r$. Further, since the field of view of the cameras mounted on the mobile mapping system are overlapping each other, it can happen that the same 3D point is visible in two or more cameras. The most straightforward approach and preferred implementation in accordance with the present invention is to use the average value of the respective intensity or color values, but the skilled person with appreciate that more sophisticated approaches exist to blend the contributions of overlapping reference views and which may also be implemented with the present invention.

After processing every pixel in the panoramic view in the above-described exemplary manner, a full 360-degree panorama without parallax effect is obtained. Hence, in contrast to the endeavors of building panoramic cameras as compact as possible, the present invention follows the counterintuitive approach of increasing the distance between the fields of view of the two cameras facing in the direction of the operator, in order to hide the operator of the mobile mapping device in the blind spot formed thereby.

In summary, the invention enables facilitated continuous generation of 360-degree panoramic imagery without the operator in the field of view, thereby advantageously reducing the amount of time needed to map a given environment by exploiting the information about the surrounding 3D geometry.

## Claims

1.  A method of mapping an indoor environment comprising:

    generating reference images of the indoor environment using a moveable trolley comprising more than two cameras mounted in close proximity to one another on the trolley, wherein two adjacent ones of the cameras comprise fields of view forming a blind spot between them for accommodating an operator of the trolley; and mapping the reference images recorded by the cameras onto a panoramic view using 3D geometry data associated with the indoor environment, wherein pixels of the reference images are mapped to pixels of the panoramic view by projecting 3D points of the 3D geometry data onto the reference images and the panoramic view, respectively.

2.  The method of any of claims 1 wherein the blind spot is formed by arranging the two adjacent ones of the cameras at a greater distance from one another than the other cameras of the more than two cameras.

3.  The method of any of the preceding claims wherein the blind spot is formed by rotating the cameras to increase the distance between the point of overlap of the fields of view and the trolley.

4.  The method of any of the preceding claims wherein the 3D geometry data is generated by determining corresponding pixels of images generated by at least one of the cameras.

5.  The method of any of claims 1-4 wherein the images used to generate the 3D geometry data are generated by at least two of the cameras simultaneously.

6.  The method of any of claims 1-4 wherein the images used to generate the 3D geometry data are generated consecutively by at least one of the cameras.

7.  The method of any of the preceding claims wherein the 3D geometry data is generated by using at least one scanning means to scan the environment along multiple planes.

8.  The method of claim 7 wherein the scanning means comprises at least one of a laser scanner, a light-field camera and a time-of-flight camera.

9.  The method of any of the preceding claims wherein the step of generating the panorama images is conducted continuously.

10. A moveable trolley for mapping an indoor environment comprising:

    more than two cameras operable to generate reference images of the indoor environment, wherein said cameras are mounted in close proximity to one another on the trolley, wherein two adjacent ones of the cameras comprise fields of view forming a blind spot between them for accommodating an operator of the trolley; means for mapping the reference images recorded by the cameras onto a panoramic view using 3D geometry data associated with the indoor environment, wherein pixels of the reference images are mapped to pixels of the panoramic view by projecting 3D points of the 3D geometry data onto the reference images and the panoramic view, respectively.

11. The trolley of claim 10 wherein the two adjacent ones of the cameras are arranged at a greater distance from one another than the distance between other cameras of the more than two cameras.

12. The trolley of claim 10 wherein the trolley is arranged to rotate said two adjacent cameras in opposing directions to one another to provide an increased distance between the point of overlap of the fields of view and the trolley.

13. The trolley of any of claims 10 to 12 further comprising:
means operable to obtain the 3D geometry data by determining corresponding pixels of images generated by at least one of the cameras.

14. The trolley of any of claims 10 to 13 further comprising a plurality of laser scanners to scan the environment along multiple planes and operable to obtain the 3D geometry data.

**Patentansprüche**

1. Verfahren zum Abbilden einer Innenumgebung, das Folgendes umfasst:

Erzeugen von Referenzbildern von der Innenumgebung mithilfe eines beweglichen Wagens, der mehr als zwei Kameras umfasst, die nahe beieinander an dem Wagen angebracht sind, wobei zwei benachbarte der Kameras Sichtfelder umfassen, die zwischen sich einen toten Winkel bilden, damit in diesem eine Bedienperson des Wagens Platz findet, und
Abbilden der von den Kameras aufgenommenen Referenzbilder auf eine Panoramaansicht mithilfe von mit der Innenumgebung verknüpften 3D-Geometriedaten, wobei durch Projizieren von 3D-Punkten der 3D-Geometriedaten auf die Referenzbilder beziehungsweise die Panoramaansicht Pixel der Referenzbilder auf Pixel der Panoramaansicht abgebildet werden.

2. Verfahren nach Anspruch 1, wobei der tote Winkel dadurch gebildet wird, dass die beiden benachbarten der Kameras in einem größeren Abstand zueinander angeordnet werden als die anderen der mehr als zwei Kameras.

3. Verfahren nach einem der vorhergehenden Ansprüche, wobei der tote Winkel dadurch gebildet wird, dass die Kameras zum Vergrößern des Abstands zwischen dem Überlappungspunkt der Sichtfelder und dem Wagen gedreht werden.

4. Verfahren nach einem der vorhergehenden Ansprüche, wobei die 3D-Geometriedaten durch Bestimmen einander entsprechender Pixel von Bildern erzeugt werden, die von mindestens einer der Kameras erzeugt werden.

5. Verfahren nach einem der Ansprüche 1 bis 4, wobei die zum Erzeugen der 3D-Geometriedaten verwendeten Bilder von mindestens zweien der Kameras gleichzeitig erzeugt werden.

6. Verfahren nach einem der Ansprüche 1 bis 4, wobei die zum Erzeugen der 3D-Geometriedaten verwendeten Bilder von mindestens einer der Kameras nacheinander erzeugt werden.

7. Verfahren nach einem der vorhergehenden Ansprüche, wobei die 3D-Geometriedaten durch Verwenden mindestens eines Scan-Mittels zum Scannen der Umgebung auf mehreren Ebenen erzeugt werden.

8. Verfahren nach Anspruch 7, wobei das Scan-Mittel einen Laserscanner und/oder eine Lichtfeldkamera oder/und eine Time-of-Flight-Kamera umfasst.

9. Verfahren nach einem der vorhergehenden Ansprüche, wobei der Schritt des Erzeugens der Panoramabilder kontinuierlich durchgeführt wird.

10. Beweglicher Wagen zum Abbilden einer Innenumgebung, der Folgendes umfasst:

mehr als zwei Kameras, die zum Erzeugen von Referenzbildern von der Innenumgebung dienen, wobei die Kameras nahe beieinander an dem Wagen angebracht sind, wobei zwei benachbarte der Kameras Sichtfelder umfassen, die zwischen sich einen toten Winkel bilden, damit in diesem eine Bedienperson des Wagens Platz findet,

Mittel zum Abbilden der von den Kameras aufgenommenen Referenzbilder auf eine Panoramaansicht mithilfe von mit der Innenumgebung verknüpften 3D-Geometriedaten, wobei durch Projizieren von 3D-Punkten der 3D-Geometriedaten auf die Referenzbilder beziehungsweise die Panoramaansicht Pixel der Referenzbilder auf Pixel der Panoramaansicht abgebildet werden.

**11.** Wagen nach Anspruch 10, wobei die beiden benachbarten der Kameras in einem Abstand zueinander angeordnet, der größer ist als der Abstand zwischen anderen der mehr als zwei Kameras.

**12.** Wagen nach Anspruch 10, wobei der Wagen so angeordnet ist, dass er die beiden benachbarten Kameras in zueinander entgegengesetzten Richtungen dreht und so für einen größeren Abstand zwischen dem Überlappungspunkt der Sichtfelder und dem Wagen sorgt.

**13.** Wagen nach einem der Ansprüche 10 bis 12, der ferner Folgendes umfasst:
Mittel, die zum Gewinnen der 3D-Geometriedaten dienen, indem einander entsprechende Pixel von Bildern bestimmt werden, die von mindestens einer der Kameras erzeugt werden.

**14.** Wagen nach einem der Ansprüche 10 bis 13, der ferner mehrere Laserscanner zum Scannen der Umgebung auf mehreren Ebenen und zum Gewinnen der 3D-Geometriedaten umfasst.

**Revendications**

**1.** Un procédé de cartographie d'un environnement intérieur comprenant :

la génération d'images de référence de l'environnement intérieur au moyen d'un chariot mobile comprenant plus de deux caméras montées à proximité étroite l'une de l'autre sur le chariot, où deux caméras adjacentes des caméras comprennent des champs de vision formant un angle mort entre elles de façon à loger un opérateur du chariot, et
l'affectation des images de référence enregistrées par les caméras à une vue panoramique au moyen de données de géométrie 3D associées à l'environnement intérieur, où des pixels des images de référence sont mappés vers des pixels de la vue panoramique par la projection de points 3D des données de géométrie 3D sur les images de référence et la vue panoramique, respectivement.

**2.** Le procédé selon la Revendication 1 où l'angle mort est formé par l'agencement des deux caméras adjacentes des caméras à une distance plus grande l'une de l'autre que les autres caméras des plus de deux caméras.

**3.** Le procédé selon l'une quelconque des Revendications précédentes où l'angle mort est formé par la rotation des caméras de façon à accroître la distance entre le point de chevauchement des champs de vision et le chariot.

**4.** Le procédé selon l'une quelconque des Revendications précédentes où les données de géométrie 3D sont générées par la détermination de pixels correspondants d'images générées par au moins une des caméras.

**5.** Le procédé selon l'une quelconque des Revendications 1 à 4 où les images utilisées de façon à générer les données de géométrie 3D sont générées par au moins deux des caméras simultanément.

**6.** Le procédé selon l'une quelconque des Revendications 1 à 4 où les images utilisées de façon à générer les données de géométrie 3D sont générées consécutivement par au moins une des caméras.

**7.** Le procédé selon l'une quelconque des Revendications précédentes où les données de géométrie 3D sont générées par l'utilisation d'au moins un moyen de scannage destiné au scannage de l'environnement le long d'une pluralité de plans.

**8.** Le procédé selon la Revendication 7 où le moyen de scannage comprend au moins un dispositif parmi un scanner à laser, une caméra à champ lumineux et une caméra à temps de vol.

9. Le procédé selon l'une quelconque des Revendications précédentes où l'opération de génération des images de panorama est menée en continu.

10. Un chariot mobile destiné à la cartographie d'un environnement intérieur comprenant :

plus de deux caméras conçues de façon à générer des images de référence de l'environnement intérieur, où lesdites caméras sont montées à proximité étroite l'une de l'autre sur le chariot, où deux caméras adjacentes des caméras comprennent des champs de vision formant un angle mort entre elles de façon à loger un opérateur du chariot,
un moyen d'affectation des images de référence enregistrées par les caméras sur une vue panoramique au moyen de données de géométrie 3D associées à l'environnement intérieur, où des pixels des images de référence sont mappés vers des pixels de la vue panoramique par la projection de points 3D des données de géométrie 3D sur les images de référence et la vue panoramique, respectivement.

11. Le chariot selon la Revendication 10 où les deux caméras adjacentes des caméras sont agencées à une distance plus grande l'une de l'autre que la distance entre d'autres caméras des plus de deux caméras.

12. Le chariot selon la Revendication 10 où le chariot est agencé de façon à faire pivoter lesdites deux caméras adjacentes dans des directions opposées l'une à l'autre de façon à fournir une distance accrue entre le point de chevauchement des champs de vision et le chariot.

13. Le chariot selon l'une quelconque des Revendications 10 à 12 comprenant en outre :
un moyen conçu de façon à obtenir les données de géométrie 3D par la détermination de pixels correspondants d'images générées par au moins une des caméras.

14. Le chariot selon l'une quelconque des Revendications 10 à 13 comprenant en outre une pluralité de scanners à laser destinés au scannage de l'environnement le long d'une pluralité de plans et conçus de façon à obtenir les données de géométrie 3D.

FIG. 1

FIG. 2

EP 2 913 796 B1

FIG. 3

FIG. 4                    FIG. 5

**FIG. 6**

**FIG. 7**

FIG. 8

FIG. 9

FIG. 10

FIG. 11

Reference image

Panoramic view

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6917693 B1

- EP 2045133 A2

**Non-patent literature cited in the description**

- A Multicamera Setup for Generating Stereo Panoramic Video. **KATSAGGELOS A K et al.** IEEE TRANSACTIONS ON MULTIMEDIA. IEEE SERVICE CENTER, 01 October 2005, 880-890